# EUROPÄISCHE PATENTSCHRIFT

(11) **EP 0 532 853 B1**
(45) Veröffentlichungstag und Bekanntmachung des Hinweises auf die Patenterteilung: **15.02.1995**
(21) Anmeldenummer: 92111656.2
(22) Anmeldetag: 09.07.1992
(51) Int. Cl.: B23K 37/04, B23K 11/06

(54) **Nahtschweissmaschine zum Verbinden von Blechzuschnitten**
Apparatus for seam welding metal plates
Dispositif pour le soudage longitudinal des tôles

(30) Priorität: 15.08.1991 CH 2410/91; 19.06.1992 CH 1948/92
(43) Veröffentlichungstag der Anmeldung: 24.03.1993
(73) Patentinhaber: ELPATRONIC AG, CH-6303 Zug (CH)
(72) Erfinder: Bischofberger, Walter, CH-8166 Niederweningen (CH); Wueger, Karl, CH-8610 Uster (CH)

(56) Entgegenhaltungen:
- EP-A- 0 254 028
- EP-A- 0 439 665

## Beschreibung

Die Erfindung betrifft eine Nahtschweissmaschine zum Verbinden von nebeneinanderliegend eingespannten Blechzuschnitten mittels einer Schweissnaht, enthaltend
- ein Schweissaggregat, welches eine Schweissachse bestimmt,
- zwei beidseits der Schweissachse angeordnete Spannvorrichtungen für die Blechzuschnitte, je mit oberen und unteren Pressbalken sowie oberen und unteren, einen Aufnahmespalt für die Blechzuschnitte begrenzenden Klemmorganen, sowie
- Längstransportmittel für den Vorschub der eingespannten Blechzuschnitte in Richtung der Schweissachse.

Nahtschweissmaschinen dieser Art werden insbesondere zur Herstellung sogenannter Platinen verwendet, wobei häufig auch Blechzuschnitte unterschiedlicher Dicke und/oder Qualität zusammenzufügen sind. Bevor die Blechzuschnitte in den Spannvorrichtungen der Maschine festgespannt werden, müssen ihre zu verschweissenden Blechränder relativ zueinander und in bezug auf die Schweissachse genau ausgerichtet werden, und während dem Längsvorschub, d.h. während dem Schweissvorgang muss diese Ausrichtung erhalten bleiben, damit die Qualität der Schweissnaht nicht beeinträchtigt wird. Dabei ist zu beachten, dass beim Schweissen erhebliche Querkräfte an den Werkstücken auftreten können, so insbesondere beim Quetschnaht- oder Ueberlapptnahtschweissen zwischen Rollenelektroden. Ueberdies ist es auch beim Nahtschweissen mittels Laserstrahl notwendig, die nebeneinanderliegenden, zu verschweissenden Stosskanten durch starke Querkräfte gegeneinanderzuhalten.

Bei einer bekannten Schweissmaschine der eingangs genannten Art ist für das Spannen und den Schweissvorschub der Blechzuschnitte ein auf dem Maschinenbett geführter, als Ganzes längsverfahrbarer Schweisswagen vorgesehen (DE-A-40 08 009). Dieser enthält im wesentlichen die vier (zwei untere und zwei obere) mit den Klemmorganen versehenen Pressbalken und je in den oberen Pressbalken eingebaute hydraulische Spannzylinder. Bei dieser Bauart können die Pressbalken nur an ihren Enden miteinander verbunden werden. Die Pressbalken selbst müssen deshalb so steif gebaut werden, dass die beim Spannen und Schweissen an ihnen angreifenden (vertikalen und horizontalen) Kräfte keine unzulässigen Verformungen verursachen. Die Baulänge der Spannvorrichtungen - und damit die Länge der herstellbaren Schweissnähte - ist deshalb praktisch ziemlich begrenzt, weil sich bei grösserer Länge unverhältnismässig grosse Abmessungen und eine entsprechende Masse des Schweisswagens ergeben würden. Ueberdies erfordern die auf dem hin und her bewegten Schweisswagen eingebauten hydraulischen Spannzylinder einen Anschluss über flexible Druckschläuche, was einen zusätzlichen Aufwand und mögliche Komplikationen bedeutet.

Mit der vorliegenden Erfindung soll, ausgehend von einer Nahtschweissmaschine der eingangs genannten Gattung, eine zweckmässigere Bauweise vorgeschlagen werden, bei der die an den Spannvorrichtungen auftretenden Kräfte sich gut beherrschen lassen und die beim Stand der Technik bestehende Beschränkung der Bau- bzw. Arbeitslänge entfällt.

Diese Aufgabe wird erfindungsgemäss mit den Merkmalen des Anspruches 1 gelöst. Demnach sind die beiden oberen und die beiden unteren Pressbalken der Spannvorrichtungen je an einem oberen bzw. unteren ortsfesten, steifen Längsträger angeordnet, die ihrerseits miteinander starr verbunden sind; mindestens die oberen Pressbalken sind dabei gegenüber dem oberen Längsträger mittels Huborganen heb- und senkbar. Ferner weist jeder Pressbalken eine Vorschubeinheit auf, wobei jede dieser Vorschubeinheiten aus in Richtung der Schweissachse verlaufenden Längsführungen, einem an diesen geführten, die Klemmorgane tragenden Schlitten und einem mit dem Schlitten verbundenen, reversierbaren Linearantrieb besteht.

Bei dieser Bauart müssen nicht die Pressbalken selbst die gesamte Biegebelastung aufnehmen, sondern die vertikalen wie die horizontalen Kräfte werden in den (jeweils für zwei Pressbalken gemeinsamen) Längsträger eingeleitet. Dabei gelingt es, auch etwas wellige oder mehrere in der Schweissrichtung hintereinandergereihte Blechzuschnitte einwandfrei zu spannen. Da ferner die Pressbalken in Richtung der Schweissachse stationär bleiben, sind die entlang dieser Achse zu bewegenden Massen drastisch vermindert, und ausserdem entfallen auch bewegliche Hydraulik-Druckschläuche.

Nachstehend wird die Erfindung anhand eines Ausführungsbeispiels in Verbindung mit der Zeichnung näher erläutert.
- Fig. 1: ist eine perspektivische Gesamtansicht der Nahtschweissmaschine gemäss dem Ausführungsbeispiel, mit einer geschweissten Platine nahezu vor der Fertigstellung und, strichpunktiert angedeutet, nachfolgend zu schweissenden Werkstücken in Ausgangsposition,
- Fig. 2: ist eine schematische Seitenansicht der Maschine, wobei die Verschalung weggelassen ist,
- Fig. 3: ist ein Vertikalschnitt entlang der Linie III-III in Fig. 2,
- Fig. 4: zeigt perspektivisch die vordere Partie der Maschine in Richtung des Pfeiles IV in Fig. 1 und 2 gesehen,
- Fig. 5: zeigt perspektivisch und teilweise weggeschnitten Teile eines Schlittens mit Klemmbacken,
- Fig. 6: ist ein Vertikalschnitt, in Vorschubrichtung gesehen, durch den linken oberen und unteren Schlitten und deren Längsführungen, und
- Fig. 7a und 7b: veranschaulichen schematisch verschiedene Einspann-Situationen zweier Blechzuschnitte im Vertikalschnitt analog Fig. 3.

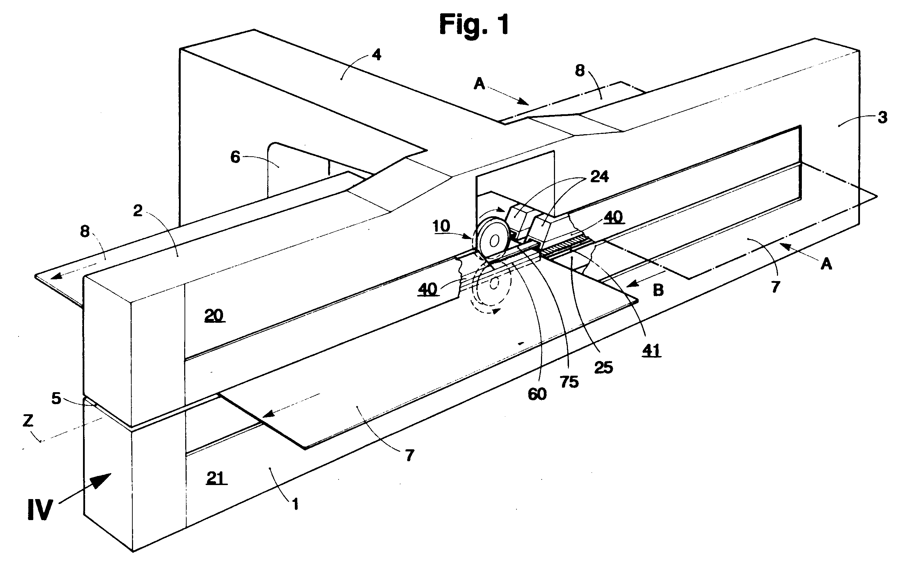

Die in Fig. 1 in ihrer Blechverschalung dargestellte Nahtschweissmaschine weist generell ein Unterteil 1 und ein Oberteil 2 auf, zwischen denen ein Spalt 5 für die Aufnahme der Werkstücke besteht. Im Zentrum der Maschine befindet sich das Schweissaggregat 10, beispielsweise ein elektrisches Widerstands-Rollnahtschweissaggregat, von dem nur die beiden Elektrodenrollen angedeutet sind. (An gleicher Stelle kann grundsätzlich auch ein anderes Schweissaggregat, z.B. für Laserschweissung, angeordnet sein). Das Schweissaggregat 10 bestimmt in der Maschine die Schweissachse Z, entlang welcher beim Schweissvorgang die Werkstücke am Schweissaggregat vorbeigefördert werden, um die Schweissnaht zu bilden. Miteinander zu verschweissende Blechzuschnitte 7, 8 werden jeweils auf der Eingangsseite der Maschine (in der rechten Hälfte von Fig. 1) von beiden Seiten in Richtung der Pfeile A in den Spalt 5 eingeschoben, deren Kanten (mit der eventuell erforderlichen Ueberlappung) parallel zur Achse Z ausgerichtet und dann festgespannt. Im festgespannten Zustand werden die Blechzuschnitte sodann in Richtung des Pfeiles B parallel zur Schweissachse durch das Aggregat 10 gefördert. Auf der Ausgangsseite (linke Hälfte in Fig. 1) wird sodann die Verspannung gelöst, und die geschweissten Werkstücke, sogenannte Platinen, werden der Maschine entnommen. Für das Zuführen (Pfeile A) und Ausrichten der Blechzuschnitte 7 und 8 sowie für das Schweissaggregat 10 können an sich bekannte Einrichtungen verwendet werden; diese sind nicht Gegenstand der vorliegenden Erfindung und brauchen hier nicht im einzelnen beschrieben zu werden.

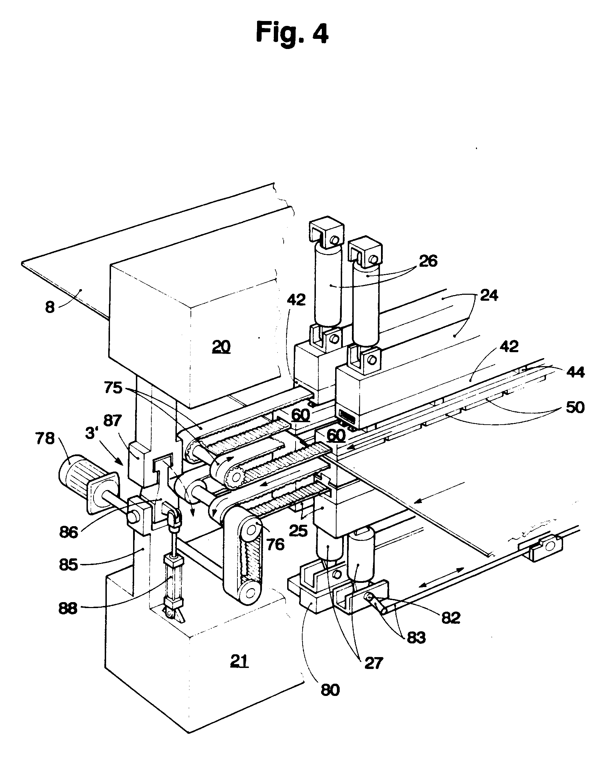

Als wesentliche tragende Konstruktionselemente enthält die Nahtschweissmaschine einen oberen und einen unteren ortsfesten, steifen Längsträger 20 bzw. 21 (siehe auch Fig. 3). Die Längsträger sind, wie oben in Fig. 1 ersichtlich, im Bereich des Schweissaggregates 10 ausgenommen, um Raum für dieses und dessen Kraftübertragung usw. zu schaffen. Ueber eine Säule 3 am eingangsseitigen Maschinenende und über ein quer zur Längsrichtung abstehendes Joch 4 sind die Längsträger 20 und 21 miteinander starr verbunden. Am vorderen Ende ist vorzugsweise eine lösbare Verriegelung 3' (s. Fig. 4) zwischen den Längstragern 20 und 21 vorgesehen, um die geschweissten Platinen in Richtung der Schweissachse Z dem Spalt 5 entnehmen zu können. Für die Blechzuschnitte 8 weist das Joch 4 einen Durchlass 6 auf. Ueber das Joch 4 erfolgt zweckmässigerweise auch die Speisung und die Steuerung des Schweissaggregates 10.

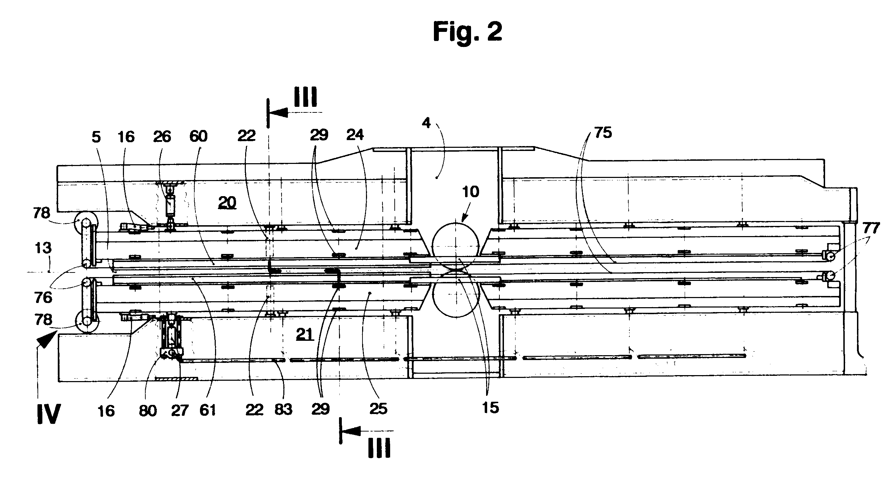

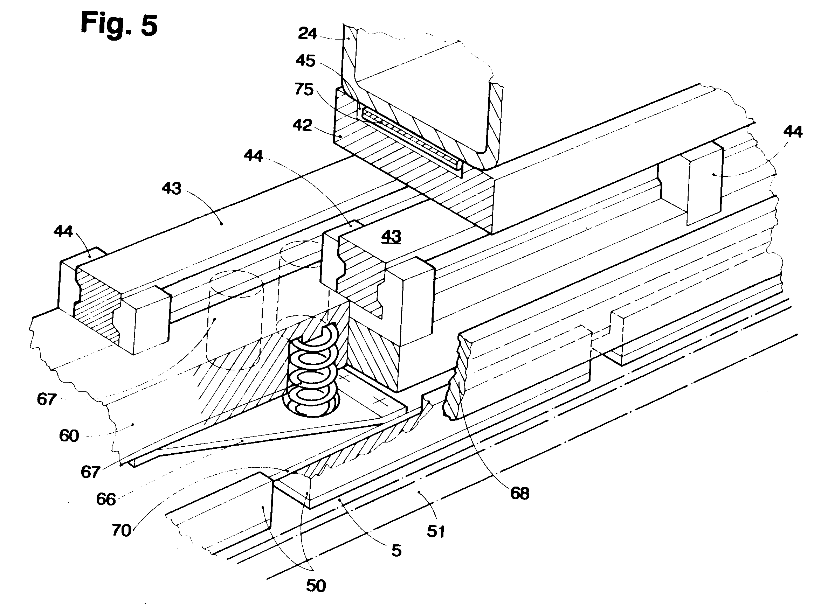

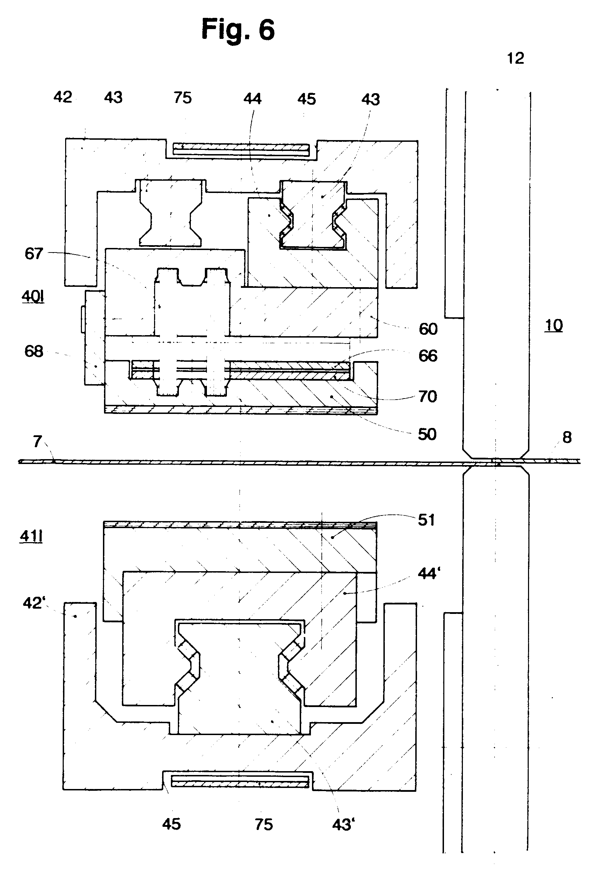

Die steifen Längsträger 20 und 21 sind gemäss Fig. 3 vorzugsweise je als rechteckiges Kastenprofil ausgebildet. Die Anordnung ist im Vertikalschnitt nach Fig. 3 im wesentlichen symmetrisch bezüglich einer Vertikalebene 12 und einer Horizontalebene 13, wobei die Schnittgerade der beiden Symmetrieebenen der Schweissachse Z entspricht. Zwischen dem oberen Längsträger 20 und dem unteren Längsträger 21 - und an diesen abgestützt - befinden sich zwei Spannvorrichtungen für die jeweils (in Z-Richtung gesehen) linken und rechten Blechzuschnitte. Diese Spannvorrichtungen sind zu beiden Seiten der Vertikalebene 12 angeordnet und weisen je einen oberen Pressbalken 24l, 24r sowie einen unteren Pressbalken 25l, 25r auf. Für den Längstransport der eingespannten Werkstücke durch die Maschine ist an der dem Spalt 5 zugekehrten Schmalseite jedes Pressbalkens eine Vorschubeinheit 40l, 40r bzw. 41l, 41r angeordnet, jeweils mit Klemmorganen 50 bzw. 51, die den Aufnahmespalt 5 begrenzen. Die Vorschubeinheiten 40, 41 sind weiter unten im einzelnen anhand der Fig. 2, 4, 5 und 6 beschrieben.

Jeder der Pressbalken 24l, 24r und 25l, 25r ist mittels zugeordneter Huborgane - z.B. hydraulische Zylinder 26l, 26r bzw. 27l, 27r - in bezug auf den oberen bzw. den unteren Längsträger 20 bzw. 21 heb- und senkbar. Die Kolbenstange jedes Hubzylinders ist mittels eines Bolzens 28 am Pressbalken angelenkt, und die Zylinderlaschen 31 sind am Längsträger verankert,und zwar beim oberen Längsträger direkt, beim unteren dagegen über eine weiter unten beschriebene Höheneinstellvorrichtung. Zum Oeffnen und Schliessen des Spaltes 5 (Presshub) wäre es grundsätzlich denkbar, nur die beiden oberen Pressbalken 24 heb- und senkbar am Längsträger anzuordnen und die unteren Balken 25 in gegebener Höhenlage fest mit dem Längsträger zu verbinden; zweckmässig ist es jedoch, alle vier Pressbalken wie dargestellt mittels Huborganen 26 bzw. 27 vertikal beweglich zu lagern. - Anstelle der dargestellten hydraulischen Zylinder sind natürlich auch andersartige Huborgane für die Pressbalken anwendbar. Beispielsweise können für jeden Pressbalken mehrere Kniehebelanordnungen vorgesehen werden, deren Betätigung dann gemeinsam (für jeden Pressbalken) z.B. hydraulisch, elektromotorisch über eine Spindel usw. erfolgen kann.

Bei ihrer Vertikalbewegung in bezug auf die Längsträger 20 und 21 sind die Pressbalken 24 und 25 zwecks Aufnahme von Querkräften seitlich geführt. Von beiden Längsträgern ragen mehrere Führungssäulen 22 mit Rollen 23 zwischen die benachbarten Pressbalken (oben in Fig. 3 sichtbar). Zwischen den Rollen 23 ist jeweils ein Stab 30 geführt, welcher mit dem einen Pressbalken - hier der linke Balken 24l - über Stege 30' verbunden ist. Jeweils zwischen zwei Führungssäulen 22 sind der linke und der rechte Pressbalken untereinander mittels Blattfedern 29 parallelogrammartig verbunden (unten in Fig. 3), wodurch (geringe) Unterschiede in der Höhenlage der Pressbalken möglich sind. Dank einer solchen Anordnung erhalten die Spannvorrichtungen eine ausgezeichnete Seitenstabilität, und es können die insbesondere beim Quetschnahtschweissen auf die Werkstücke einwirkenden Seitenkräfte einwandfrei aufgenommen werden.

Wie aus der Fig. 2 hervorgeht, sind die Pressbalken 24, 25 jeweils im Bereich des Schweissaggregates 10 unterbrochen, wobei jedoch die vorderen und hinteren Abschnitte durch Stege 15 verbunden sind. Zur Positionierung in Längsrichtung ist jeder Pressbalken mit dem oberen bzw. unteren Längsträger 20 bzw. 21 durch einen Lenker 16 verbunden.

Der Aufbau der Vorschubeinheiten 40, 41 wird nun anhand der Figuren 4, 5 und 6 beschrieben. Die linken und die rechten Vorschubeinheiten sind jeweils spiegelsymmetrisch ausgebildet. Die unteren Einheiten 41 sind insbesondere bezüglich Anordnung der Klemmbacken 51 etwas einfacher ausgeführt als die oberen Einheiten 40, worauf später kurz eingegangen wird.

Eine obere Vorschubeinheit 40 gemäss Fig. 4, 5 und 6 weist ein durchgehend mit dem Pressbalken 24 fest verbundenes, kanalartiges Profil 42 auf. Am Profil 42 sind Linearführungsschienen 43 befestigt, an denen mehrere Rollenlager-Einheiten 44 laufen, die mit einem Schlitten 60 verschraubt sind. Die Länge der Schlitten 60 ist aus Fig. 2 ersichtlich und beträgt etwas weniger als die Hälfte der Maschinenlänge.

Für die Längsbewegung der Schlitten 60 dient ein reversierbarer Linearantrieb mit Motor 78 (Fig. 2, 4) und Zahnriemen 75. Der Zahnriemen 75 ist am vorderen Ende des Schlittens 60 befestigt (links in Fig. 2) und erstreckt sich von dort über ein Antriebsritzel 76, ein Umlenkritzel 77 (rechts in Fig. 2) und zurück zum hinteren Ende des Schlittens 60 (links von der Mitte in Fig. 2). Schlitten 60 und Zahnriemen 75 bilden somit eine geschlossene Schleife. Oben am Profil 42 ist ein Längshohlraum 45 für den Rücklauf des Zahnriemens 75 ausgespart.

Unterhalb des Schlittens 60 jeder oberen Vorschubeinheit 40 erstreckt sich ein Band 70 aus Federstahl über die gesamte Länge des Schlittens. An diesem Band 70 sind die oberen Klemmbacken 50 befestigt, und zwar lösbar, damit abgenützte Klemmbacken ausgewechselt werden können. Mit dem Schlitten 60 ist das Band 70 z.B. über eine oder mehrere flach abgewinkelte Blattfedern 66 verbunden. Zwischen dem Schlitten 60 und jeder Klemmbacke 50 sind eine Anzahl Druckfedern 67 verspannt, die durch entsprechende Oeffnungen 71 im Band 70 und in den Blattfedern 66 hindurchragen. Der Höchstabstabstand zwischen den Klemmbacken 50 und dem Schlitten 60 ist durch (nicht sichtbare) Schraubenbolzen gegeben, die im Schlitten 60 festsitzen. Die Seitenführung der Klemmbacken 50 ist durch Längsleisten 68 gewährleistet, die an der Aussenseite jedes Schlittens befestigt sind. Dank der beschriebenen Anordnung sind die Klemmbacken 50 in bezug auf die Schlitten 60 beweglich, wobei die Blattfedern 66 die Zugkräfte während dem Längstransport des Schlittens unter Belastung übertragen. Anstelle der dargestellten Anordnung mit den Blattfedern 66 kann aber auch das Band 70 selbst an seinen Enden entsprechend abgewinkelt und mit dem Schlitten 60 verbunden sein.

Wie erwähnt, sind die unteren Vorschubeinheiten 41l und 41r analog ausgebildet, jedoch insofern einfacher, als im kanalartigen Profil 42' nur eine einzige Linearführungsschiene 43' mit durchgehender Rollenführung 44' vorgesehen ist. Anstelle einzelner Klemmplatten kann ein durchgehender Klemmbelag 51 direkt, d.h. nicht über zwischengefügte Druckfedern, an der Rollenführung befestigt sein.

Die Wirkungsweise der beschriebenen Spannvorrichtungen ist wie folgt: Beim Schliesshub zum Spannen der Blechzuschnitte 7 und 8 werden die Huborgane der Pressbalken betätigt, d.h. beim dargestellten Beispiel fahren die Kolben in sämtlichen Hubzylindern 26 und 27 in ihre Endstellung (Anschlag am Zylinder). Dabei bilden die unteren Pressbalken 25 mit ihren Klemmbacken 51 eine feste Auflage für die Werkstücke, während an den Schlitten 60 der oberen Pressbalken die Druckfedern 67 über den Klemmbacken 50 teilweise zusammengedrückt werden und entsprechend ihrer Federkennlinie die Einspannkraft bestimmen.

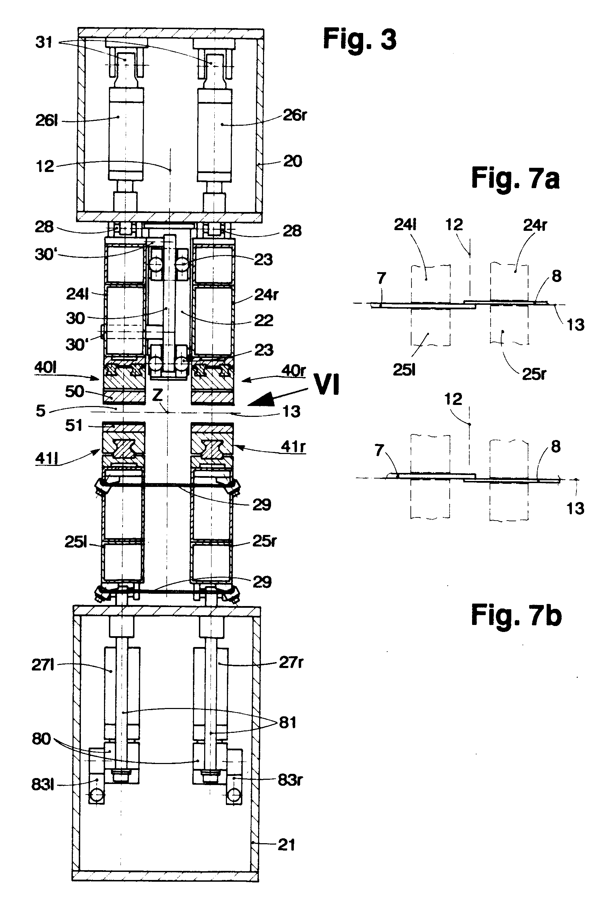

Zweckmässigerweise ist bei der Verankerung der Hubzylinder 27 am unteren Längsträger 21 eine Einstellmöglichkeit der Höhenlage der Zylinderlaschen vorgesehen, wie sie beispielsweise aus den Figuren 2, 3 und 4 ersichtlich ist. Für die Zylinderlaschen sind Einstellsockel 80 vorgesehen, die mittels Zugschrauben 81 am Längsträger 21 befestigt sind. Jeder Zylinder 27 ist an einem Sockel 80 über einen Exzenterbolzen 82 verankert. Sämtliche einem Pressbalken 25l bzw. 25r zugeordnete Exzenterbolzen sind jeweils über ein Steuergestänge 83 gemeinsam schwenkbar. Dadurch ist es möglich, verschiedene Endlagen der unteren Pressbalken 25l, 25r in bezug auf die Horizontalebene 13 einzustellen, wie dies in den Fig. 7a und 7b schematisch veranschaulicht ist. Es ergeben sich dabei vorbestimmte Spannkräfte auch bei unterschiedlichen Blechdicken und es können insbesondere entgegengesetzte Ueberlappungs-Situationen der zu verschweissenden Blechränder berücksichtigt werden (linkes Blech 7 unten nach Fig. 7a, oder rechtes Blech 8 unten nach Fig. 7b).

Aus der Fig. 4 ist schliesslich noch die weiter oben erwähnte, lösbare Verriegelung 3' zwischen oberem und unteren Längsträger am vorderen Maschinenende ersichtlich: An einer vom unteren Träger 21 ausgehenden Stütze 85 ist ein Schwenkriegel 86 gelagert, welcher seitlich in eine am oberen Träger 20 verankerte Aufnahme 87 eingreift. Dadurch besteht eine zugfeste Verbindung zwischen den Enden der Träger 20 und 21. Zum Ausfahren der geschweissten Platine (bei druckentlasteten Pressbalken) wird der Riegel 86 mittels einem pneumatischen Zylinder 88 ausgeschwenkt.

## Patentansprüche

1. Nahtschweissmaschine zum Verbinden von nebeneinanderliegend eingespannten Blechzuschnitten (7, 8) mittels einer Schweissnaht, enthaltend
- ein Schweissaggregat (10), welches eine Schweissachse (Z) bestimmt,
- zwei beidseits der Schweissachse (Z) angeordnete Spannvorrichtungen für die Blechzuschnitte (7, 8), je mit oberen und unteren Pressbalken (24, 25) sowie oberen und unteren, einen Aufnahmespalt (5) für die Blechzuschnitte (7, 8) begrenzenden Klemmorganen (50, 51), sowie
- Längstransportmittel für den Vorschub der eingespannten Blechzuschnitte (7, 8) in Richtung der Schweissachse (Z),
dadurch **gekennzeichnet,**
- dass die beiden oberen (24) und die beiden unteren Pressbalken (25) je an einem oberen bzw. unteren ortsfesten, steifen Längsträger (20 bzw. 21) angeordnet sind, wobei die beiden Längsträger miteinander starr verbunden sind, und wobei mindestens die oberen Pressbalken (24) gegenüber dem oberen Längsträger (20) je mittels Huborganen (26) heb- und senkbar sind,
- und dass jeder Pressbalken (24, 25) eine Vorschubeinheit (40, 41) aufweist, je bestehend aus in Richtung der Schweissachse (Z) verlaufenden Längsführungen (43), einem an diesen geführten, die Klemmorgane (50, 51) tragenden Schlitten (60, 44') und einem mit dem Schlitten verbundenen, reversierbaren Linearantrieb (75 - 78).

2. Nahtschweissmaschine nach Anspruch 1, dadurch gekennzeichnet, dass die beiden Längsträger (20, 21) im Bereich des Schweissaggregates (10) über ein Joch (4) sowie an mindestens einem ihrer Enden miteinander verbunden sind.

3. Nahtschweissmaschine nach Anspruch 1, dadurch gekennzeichnet, dass beide Längsträger (20, 21) mehrere Führungssäulen (22) aufweisen, die einander zugekehrt sind und sich zwischen den beiden oberen (24) bzw. zwischen den beiden unteren Pressbalken (25) erstrecken.

4. Nahtschweissmaschine nach Anspruch 3, dadurch gekennzeichnet, dass jeweils der eine Pressbalken (24l, 25l) an den Führungssäulen (22) vertikal beweglich geführt und der andere Pressbalken (24r, 25r) mit dem geführten Pressbalken über parallelogrammartig angeordnete Zugorgane (29) verbunden ist.

5. Nahtschweissmaschine nach Anspruch 4, dadurch gekennzeichnet, dass die Zugorgane (29) als Blattfedern ausgebildet sind.

6. Nahtschweissmaschine nach Anspruch 1, dadurch gekennzeichnet, dass die Längsträger (20, 21) als Hohlprofile gestaltet sind, in deren Hohlraum die Huborgane (26, 27) untergebracht sind.

7. Nahtschweissmaschine nach Anspruch 1, dadurch gekennzeichnet, dass mindestens am unteren Längsträger (21) die Huborgane (27) höheneinstellbar verankert sind.

8. Nahtschweissmaschine nach Anspruch 1, dadurch gekennzeichnet, dass die Klemmorgane (50) mindestens der oberen Vorschubeinheiten (40) in mehrere Klemmbacken unterteilt sind, die untereinander über Mitnahmeorgane (70) beweglich verbunden sind.

9. Nahtschweissmaschine nach Anspruch 1, dadurch gekennzeichnet, dass mindestens an den oberen Vorschubeinheiten (40) die Klemmorgane (50) über Druckfedern (67) am Schlitten (60) abgestützt sind.

10. Nahtschweissmaschine nach Anspruch 1, dadurch gekennzeichnet, dass der Schlitten (60, 44') jeder Vorschubeinheit (40, 41) an beiden Enden mit den Enden eines flexiblen Antriebsorgans (75) verbunden ist, das entlang den Längsführungen (42, 43) und über an deren Enden angeordnete Umlenkorgane (76, 77) geführt ist.

11. Nahtschweissmaschine nach Anspruch 7, dadurch gekennzeichnet, dass die Huborgane (26, 27) gruppenweise,jedoch links und rechts getrennt, höheneinstellbar sind.

## Claims

1. A seam welding machine for joining, by means of a weld seam, sheet metal blanks (7, 8) clamped side by side, containing
- a welding unit (10) which determines a weld axis (Z),
- two clamping devices disposed on both sides of the weld axis (Z) for the sheet metal blanks (7, 8), each with upper and lower press beams (24, 25) and with upper and lower clamping elements (50, 51) delimiting a receiving gap (5) for the sheet metal blanks (7, 8), and
- longitudinal conveying means for advancing the clamped sheet metal blanks (7, 8) in the direction of the weld axis (Z),
characterised in that
- the two upper press beams (24) and the two lower press beams (25) are each disposed on a fixed, stiff upper and lower longitudinal girder (20; 21), respectively, wherein the two longitudinal girders are rigidly attached to one another, and wherein at least the upper press beams (24) can each be raised and lowered in relation to the upper longitudinal girder (20) by means of lifting elements (26),
- and that each press crossbeam (24, 25) has a feed unit (40, 41), each feed unit consisting of longitudinal guides (43) extending in the direction of the weld axis (Z), a slide (60, 44') guided on these guides and carrying the clamping elements (50, 51), and a reversible linear drive (75 - 78) connected to the slide.

2. A seam welding machine according to claim 1, characterised in that the two longitudinal girders (20, 21) are connected to one another by a yoke (4) in the region of the welding unit (10), and at at least one of their ends.

3. A seam welding machine according to claim 1, characterised in that the two longitudinal girders (20, 21) comprise a plurality of guide pillars (22) which face one another and which extend between the two upper press beams (24) and between the two lower press beams (25), respectively.

4. A seam welding machine according to claim 3, characterised in that one press beam (24l, 25l) in each ease is vertically movably guided on the guide pillars (22) and the other press beam (24r, 25r) is attached to the guided press beam by tension elements (29) which are disposed in the manner of a parallelogram.

5. A seam welding machine according to claim 4, characterised in that the tension elements (29) are constructed as leaf springs.

6. A seam welding machine according to claim 1, characterised in that the longitudinal girders (20, 21) are formed as hollow sections, in the hollow space of which the lifting elements (26, 27) are accommodated.

7. A seam welding machine according to claim 1, characterised in that the lifting elements (27) are anchored in a height-adjustable manner, at least on the lower longitudinal girder (21).

8. A seam welding machine according to claim 1, characterised in that the clamping elements (50) of at least the upper feed units (40) are subdivided into a plurality of clamping jaws which are movably connected to one another via carrier elements (70).

9. A seam welding machine according to claim 1, characterised in that, at least on the upper feed units (40), the clamping elements (50) are supported on the slide (60) via compression springs (67).

10. A seam welding machine according to claim 1, characterised in that the slide (60, 44') of each feed unit (40, 41) is connected at both ends to the ends of a flexible drive element (75) which is guided along the longitudinal guides (42, 43) and over deflection elements (76, 77) disposed at the ends thereof.

11. A seam welding machine according to claim 7, characterised in that the lifting elements (26, 27) are height-adjustable in groups, but separately on the left and on the right.

## Revendications

1. Machine de soudage continu servant à réunir des flans de tôle (7, 8), disposés l'un à côté de l'autre et serrés sous contrainte, au moyen d'un cordon de soudure, comprenant :
- un ensemble de soudage (10), qui définit un axe de soudage (Z),
- deux dispositifs de serrage des flans de tôle (7, 8), qui sont disposés de part et d'autre de l'axe de soudage (Z) et comprennent chacun une barre de pression supérieure (24) et une barre de pression inférieure (25), ainsi qu'un organe supérieur de serrage (50) et un organe inférieur de serrage (51) qui délimitent un intervalle (5) de réception des flans de tôle (7, 8), et
- des moyens de transport longitudinal servant à faire avancer les flans de tôle (7, 8), serrés sous contrainte, en direction de l'axe de soudage (Z),
caractérisée :
- en ce que les deux barres de pression supérieures (24) et les deux barres de pression inférieures (25) sont disposées respectivement sur une poutre longitudinale supérieure (20) et sur une poutre longitudinale inférieure (21), rigides et fixes, les deux poutres longitudinales étant réunies rigidement entre elles et au moins les barres de pression supérieures (24) étant agencées de façon à pouvoir être relevées et abaissées vis-à-vis de la poutre longitudinale supérieure (20) au moyen d'organes de soulèvement (26),
- et en ce que chaque barrre de pression (24, 25) comporte une unité d'avance (40, 41), constituée chacune de glissières longitudinales (43), s'étendant suivant la direction de l'axe de soudage (Z), d'un chariot (60, 44'), qui est guidé sur ces glissières et qui porte les organes de serrage (50, 51), et d'un dispositif d'entraînement rectiligne réversible (75 - 78) qui est relié au chariot.

2. Machine de soudage continu selon la revendication 1, caractérisée en ce que les deux poutres longitudinales (20, 21) sont réunies entre elles dans la zone de l'ensemble de soudage (10) par l'intermédiaire d'un étrier (4), ainsi qu'à au moins une de leurs extrémités.

3. Machine de soudage continu selon la revendication 1, caractérisée en ce que les deux poutres longitudinales (20, 21) comportent plusieurs colonnes de guidage (22) qui se font face et qui s'étendent respectivement entre les deux barres de pression supérieures (24) et entre les deux barres de pression inférieures (25).

4. Machine de soudage continu suivant la revendication 3, caractérisée en ce que, pour chaque paire de barres de pression, l'une (24l, 25l) est guidée sur les colonnes de guidage (22) de façon à être mobile suivant la direction verticale et l'autre (24r, 25r) est reliée à la barre de pression guidée, par l'intermédiaire d'organes de traction (29) disposés à la façon d'un parallélogramme.

5. Machine de soudage continu selon la revendication 4, caractérisée en ce que les organes de traction (29) sont réalisés sous la forme de ressorts à lame.

6. Machine de soudage continu selon la revendication 1, caractérisée en ce que les poutres longitudinales (20, 21) sont réalisées sous la forme d'éléments profilés creux dans la cavité desquels sont montés les organes de poussée (26, 27).

7. Machine de soudage continu selon la revendication 1, caractérisée en ce qu'au moins sur la poutre longitudinale inférieure (21), les organes de poussée (27) sont ancrés de façon que leur position en hauteur soit réglable.

8. Machine de soudage continu selon la revendication 1, caractérisée en ce que les organes de serrage (50) d'au moins les unités d'avance supérieures (40) sont divisés en plusieurs mâchoires de serrage qui sont reliées entre elles d'une manière mobile par l'intermédiaire d'organes d'en traînement (70).

9. Machine de soudage continu selon la revendication 1, caractérisée en ce qu'au moins dans les unités d'avance supérieures (40), les organes de serrage (50) sont en appui sur le chariot (60) par l'intermédiaire de ressorts de compression (67).

10. Machine de soudage continu selon la revendication 1, caractérisée en ce qu'à ses deux extrémités, le chariot (60, 44') de chaque unité d'avance (40, 41) est relié aux extrémités d'un organe d'entraînement (75) flexible qui est guidé le long des glissières longitudinales (42, 43) et sur des organes de renvoi (76, 77) disposés aux extrémités de ces glissières.

11. Machine de soudage continu selon la revendication 7, caractérisée en ce que les organes de poussée (26, 27) sont agencés de façon à pouvoir être réglés en hauteur par groupes, mais séparément à gauche et à droite.
